# EUROPEAN PATENT APPLICATION

(11) **EP 4 459 954 A1**
(43) Date of publication of application: **06.11.2024**
(21) Application number: 22915184.0
(22) Date of filing: 30.12.2022
(51) Int. Cl.: H04L 61/25

(54) **INFORMATION PROCESSING METHOD AND APPARATUS, DEVICE, AND READABLE STORAGE MEDIUM**

(30) Priority: 31.12.2021 CN 202111664677
(71) Applicant: CHINA MOBILE COMMUNICATION CO., LTD. RESEARCH INSTITUTE, Beijing 100053 (CN); CHINA MOBILE COMMUNICATIONS GROUP CO., LTD., Beijing 100032 (CN)
(72) Inventor: WANG, Dan, Beijing 100032 (CN); LI, Yongjing, Beijing 100032 (CN)
(74) Representative: GPI Brevets
(86) International application number: PCT/CN2022/143954
(87) International publication number: WO 2023/125936

(57) **Abstract**

An information processing method, apparatus, device and readable storage medium are provided, which relates to the field of communication technology. The method includes: obtaining network address translation information from a first device or function; performing a processing according to the network address translation information; where the network address translation information includes one or more of the following: a correspondence between a public network address and a private network address; a public network address; a private network address; a port number of public network address; a port number of private network address.

## Description

### CROSS REFERENCE OF RELATED APPLICATION

The present disclosure claims a priority of Chinese patent disclosure No. 202111664677.1 filed on December 31, 2021, which are incorporated herein by reference in its entirety.

### TECHNICAL FIELD

The present disclosure relates to the field of communication technology, and in particular to an information processing method, apparatus, device and readable storage medium.

### BACKGROUND

In the fifth-generation mobile communication (5th-Generation, 5G) network of related technology, 5G Core Network (5G Core Network, 5GC) cannot control the network address translation (NAT) function, which is not conducive to end-to-end control.

### SUMMARY

The present disclosure provide an information processing method, apparatus, device, and readable storage medium to facilitate end-to-end control.

In a first aspect, an information processing method is provided in the embodiment of the present disclosure, applied to a first network function, including:
obtaining network address translation information from a first device or function;
performing a processing according to the network address translation information; where the network address translation information includes one or more of the following:
a correspondence between a public network address and a private network address; a public network address; a private network address; a port number of public network address; a port number of private network address.

Optionally, the first network function includes at least one of the following:
network exposure function (NEF); session management function (SMF); user plane function (UPF); policy control function (PCF); network address translation function.

Optionally, the first device or function includes one or more of the following:
network address translation function; network address translation device; network address translation network element; external function; device or function or network element having network address translation information; device or function or network element having network address translation function.

Optionally, the obtaining the network address translation information from the first device or function includes:
determining a target first device or function;
obtaining the network address translation information from the target first device or function.

Optionally, the obtaining the network address translation information from the first device or function includes:
obtaining a first request from an application function (AF), where the first request includes the public network address;
determining a target first device or function according to the first request; and
obtaining a correspondence between the public network address and the private network address, or the private network address corresponding to the target public network address, from the target first device or function.

Optionally, when the correspondence between the public network address and the private network address is obtained from the target first device or function, the performing the processing according to the network address translation information includes:
according to the public network address and the correspondence between the public network address and the private network address, determining the private network address corresponding to the public network address.

Optionally, the obtaining the network address translation information from the first device or function includes:
obtaining a second request from an AF, where the second request is configured to request a mapping relationship between the public network address and the private network address;
determining a target first device or function according to the second request;
obtaining a correspondence between the public network address and the private network address from the target first device or function.

Optionally, the determining the target first device or function includes:
determining the target first device or function through a network repository function (NRF).

Optionally, the determining the target first device or function through the NRF includes:
sending a third request to the NRF;
receiving information of the target first device or function which is sent by the NRF according to the third request;
where the third request includes information of the private network address and/or information of the public network address;
the information of the private network address includes one or more of: an IPv4 address, an IPv6 prefix and an IP domain; the information of the public network address includes one or more of the IPv4 address and the IPv6 prefix.

Optionally, the obtaining the correspondence between the public network address and the private network address from the target first device or function includes:
calling a service of the target first device or function to obtain the correspondence between the public network address and the private network address from the target first device or function.

Optionally, the calling the service of the target first device or function to obtain the correspondence between the public network address and the private network address from the target first device or function includes:
sending a fourth request to the target first device or function, where the fourth request includes an ID and/or a type of the first network function;
receiving the correspondence between the public network address and the private network address sent by the target first device or function according to the fourth request.

Optionally, the obtaining the private network address corresponding to the public network address from the target first device or function includes:
calling a service of the first device or function to obtain the private network address corresponding to the public network address from the target first device or function.

Optionally, the calling the service of the first device or function to obtain the private network address corresponding to the public network address from the target first device or function includes:
sending a fifth request to the target first device or function, where the fifth request includes an ID and/or a type of the first network function and the private network address;
receiving the private network address corresponding to the public network address and sent by the target first device or function according to the fifth request.

Optionally, the performing the processing according to the network address translation information includes at least one of the following:
according to a request of an AF, obtaining the private network address corresponding to the public network address;
according to a request from a second device or function, obtaining the public network address corresponding to the private network address.

In a second aspect, an information processing method is provided in the embodiment of the present disclosure, applied to a first device or function, including:
sending network address translation information to the first network function, where the network address translation information includes one or more of the following:
a correspondence between a public network address and a private network address;
a public network address;
a private network address;
a port number of a public network address;
a port number of a private network address.

Optionally, the method further includes:
sending a sixth request to a NRF, where the sixth request is configured to register with the NRF, where the sixth request includes: information of the private network address and/or information of the public network address;
the information of the private network address includes one or more of the following: IPv4 address segment, IPv46 prefix segment, IP domain information, and port number;
the information of the public network address includes one or more of the following: IPv4 address segment, IPv46 prefix segment, and port number.

Optionally, the method further includes one or more of the following:
sending a seventh request to the NRF, where the seventh request is configured to deregister with the NRF;
sending an eighth request to the NRF, where the eighth request is configured to perform a registration update with the NRF.

Optionally, the sending the network address translation information to the first network function includes:
receiving a request from the first network function and including an ID and/or a type of a network device for the first network function;
according to the request, sending the network address translation information to the first network function.

Optionally, the request further includes one or more of: information of a candidate public network addresses and information of a candidate private network addresses.

In a third aspect, an information processing method is provided in the embodiment of the present disclosure, applied to a network repository function (NRF), including:
obtaining a request from a first network function;
according to the request, sending information of a first device or function to the first network function, where the first device or function is configured to provide network address translation information or perform a network address translation according to network address translation information;
the network address translation information includes one or more of the following:
   a correspondence between a public network address and a private network address;
   a public network address;
   a private network address;
   a port number of a public network address;
   a port number of a private network address.

Optionally, the method further includes:
receiving a sixth request from the first device or function;
registering the first device or function according to the sixth request;
the sixth request includes: information of the private network address and/or information of the public network address;
the information of the private network address information includes one or more of the following: IPv4 address segment, IPv46 prefix segment, IP domain information, port number;
the information of the public network address includes one or more of the following: IPv4 address segment, IPv46 prefix segment, and port number.

Optionally, the method further includes one or more of the following:
receiving a seventh request from the first device or function, and deregistering the first device or function according to the seventh request;
receiving an eighth request of the first device or function, and performing a registration update of the first device or function according to the eighth request.

In a fourth aspect, an information processing method is provided in the embodiment of the present disclosure, applied to a first network function, including:
discovering, through a network repository function (NRF), a first device or function, where the first device or function is configured to provide network address translation information or to perform a network address translation according to network address translation information;
the network address translation information includes one or more of the following:
   a correspondence between a public network address and a private network address;
   a public network address;
   a private network address;
   a port number of a public network address;
   a port number of a private network address.

Optionally, the discovering through the NRF the first device or function includes:
sending a request to the NRF;
receiving information of the first device or function sent by the NRF according to the request;
where the request includes information of the private network address and/or information of the public network address;
the information of the private network address includes one or more of: IPv4 address, IPv6 prefix, the IP domain; the information of the public network address includes one or more of IPv4 address and IPv6 prefix.

In fifth aspect, an information processing device is provided in the embodiment of the present disclosure, applied to a first network function, including:
a first obtaining module, configured to obtain network address translation information from a first device or function;
a first processing module, configured to perform a processing according to the network address translation information; where the network address translation information includes one or more of the following:
a correspondence between a public network address and a private network address; a public network address; a private network address; a port number of public network address; a port number of private network address.

Optionally, the first network function includes at least one of the following:
network exposure function (NEF); session management function (SMF); user plane function (UPF); policy control function (PCF); network address translation function.

Optionally, the first device or function includes one or more of the following:
network address translation function; network address translation device; network address translation network element; external function; device or function or network element having network address translation information; device or function or network element having network address translation function.

Optionally, the first obtaining module includes:
a first determining submodule, configured to determine a target first device or function;
a first obtaining submodule, configured to obtain the network address translation information from the target first device or function.

Optionally, the first obtaining module includes:
a first obtaining submodule, configured to obtain a first request from an application function (AF), where the first request includes the public network address;
a first determining submodule, configured to determine a target first device or function according to the first request; and
a second obtaining submodule, configured to obtain a correspondence between the public network address and the private network address, or the private network address corresponding to the target public network address, from the target first device or function.

Optionally, when the correspondence between the public network address and the private network address is obtained from the target first device or function, the first processing module is configured to:
according to the public network address and the correspondence between the public network address and the private network address, determine the private network address corresponding to the public network address.

Optionally, the second obtaining submodule is configured to:
call a service of the first device or function to obtain the private network address corresponding to the public network address from the target first device or function.

Optionally, the second obtaining submodule is configured to:
send a fifth request to the target first device or function, where the fifth request includes an ID and/or a type of the first network function and the private network address;
receive the private network address corresponding to the public network address and sent by the target first device or function according to the fifth request.

Optionally, the first obtaining module includes:
a first obtaining submodule, configured to obtain a second request from an AF, where the second request is configured to request a mapping relationship between the public network address and the private network address;
a first determining submodule, configured to determine a target first device or function according to the second request;
a second obtaining submodule, configured to obtain a correspondence between the public network address and the private network address from the target first device or function.

Optionally, the first determining submodule is configured to:
determine the target first device or function through a network repository function (NRF).

Optionally, the first determining submodule is configured to:
send a third request to the NRF;
receive information of the target first device or function which is sent by the NRF according to the third request;
where the third request includes information of the private network address and/or information of the public network address;
the information of the private network address includes one or more of: an IPv4 address, an IPv6 prefix and an IP domain; the information of the public network address includes one or more of the IPv4 address and the IPv6 prefix.

Optionally, the second obtaining submodule is configured to:
call a service of the target first device or function to obtain the correspondence between the public network address and the private network address from the target first device or function.

Optionally, the second obtaining submodule is configured to:
send a fourth request to the target first device or function, where the fourth request includes an ID and/or a type of the first network function;
receive the correspondence between the public network address and the private network address sent by the target first device or function according to the fourth request.

Optionally, the first processing submodule is configured to:
according to a request of an AF, obtain the private network address corresponding to the public network address;
according to a request from a second device or function, obtain the public network address corresponding to the private network address.

In a sixth aspect, an information processing device is provided in the embodiments of the present disclosure, applied to a first device or function, including:
a first sending module, configured to send network address translation information to the first network function, where the network address translation information includes one or more of the following:
a correspondence between a public network address and a private network address;
a public network address;
a private network address;
a port number of a public network address;
a port number of a private network address.

Optionally, the device further includes:
a second sending module, configured to send a sixth request to a NRF, where the sixth request is configured to register with the NRF, where the sixth request includes: information of the private network address and/or information of the public network address;
the information of the private network address includes one or more of the following: IPv4 address segment, IPv46 prefix segment, IP domain information, and port number;
the information of the public network address includes one or more of the following: IPv4 address segment, IPv46 prefix segment, and port number.

Optionally, the device further includes one or more of the following:
a third sending module, configured to send a seventh request to the NRF, where the seventh request is configured to deregister with the NRF;
a fourth sending module, configured to send an eighth request to the NRF, where the eighth request is configured to perform a registration update with the NRF.

Optionally, the first sending module is configured to:
receive a request from the first network function and including an ID and/or a type of a network device for the first network function;
according to the request, send the network address translation information to the first network function.

Optionally, the request further includes one or more of: information of a candidate public network addresses and information of a candidate private network addresses.

In a seventh aspect, an information processing device is provided in the embodiment of the present disclosure, applied to a network repository function (NRF), including:
a first obtaining module, configured to obtain a request from a first network function;
a first sending module, configured to, according to the request, send information of a first device or function to the first network function, where the first device or function is configured to provide network address translation information or perform a network address translation according to network address translation information;
the network address translation information includes one or more of the following:
   a correspondence between a public network address and a private network address;
   a public network address;
   a private network address;
   a port number of a public network address;
   a port number of a private network address.

Optionally, the device further includes:
a first receiving module, configured to receive a sixth request from the first device or function;
a first registering module, configured to register the first device or function according to the sixth request;
the sixth request includes: information of the private network address and/or information of the public network address;
the information of the private network address information includes one or more of the following: IPv4 address segment, IPv46 prefix segment, IP domain information, port number;
the information of the public network address includes one or more of the following: IPv4 address segment, IPv46 prefix segment, and port number.

Optionally, the device further includes one or more of the following:
a first deregistering module, configured to receive a seventh request from the first device or function, and deregister the first device or function according to the seventh request;
a first registering update module, configured to receive an eighth request of the first device or function, and perform a registration update of the first device or function according to the eighth request.

In an eighth aspect, an information processing device is further provided in the embodiment of the present disclosure, applied to a first network function, including:
a first processing module, configured to discover through a network repository function (NRF) a first device or function, where the first device or function is configured to provide network address translation information or to perform a network address translation according to network address translation information;
the network address translation information includes one or more of the following:
a correspondence between a public network address and a private network address;
a public network address;
a private network address;
a port number of a public network address;
a port number of a private network address.

Optionally, the first processing module includes:
a first sending submodule, configured to send a request to the NRF;
a first receiving submodule, configured to receive information of the first device or function sent by the NRF according to the request;
where the request includes information of the private network address and/or information of the public network address;
the information of the private network address includes one or more of: IPv4 address, IPv6 prefix, the IP domain; the information of the public network address includes one or more of IPv4 address and IPv6 prefix.

In a ninth aspect, an information processing device is provided in the embodiment of the present disclosure, applied to a first network function, including: a processor and a transceiver;
the transceiver is configured to obtain network address translation information from a first device or function;
the processor is configured to perform a processing according to the network address translation information; where the network address translation information includes one or more of the following:
a correspondence between a public network address and a private network address; a public network address; a private network address; a port number of public network address; a port number of private network address.

Optionally, the first network function includes at least one of the following:
network exposure function (NEF); session management function (SMF); user plane function (UPF); policy control function (PCF); network address translation function.

Optionally, the first device or function includes one or more of the following:
network address translation function; network address translation device; network address translation network element; external function; device or function or network element having network address translation information; device or function or network element having network address translation function.

Optionally, the processor is configured to perform:
determining a target first device or function;
obtaining the network address translation information from the target first device or function.

Optionally, the processor is configured to perform:
obtaining a first request from an application function (AF), where the first request includes the public network address;
determining a target first device or function according to the first request; and
obtaining a correspondence between the public network address and the private network address, or the private network address corresponding to the target public network address, from the target first device or function.

Optionally, when the correspondence between the public network address and the private network address is obtained from the target first device or function, processor is configured to perform:
according to the public network address and the correspondence between the public network address and the private network address, determining the private network address corresponding to the public network address.

Optionally, the processor is configured to perform:
obtaining a second request from an AF, where the second request is configured to request a mapping relationship between the public network address and the private network address;
determining a target first device or function according to the second request;
obtaining a correspondence between the public network address and the private network address from the target first device or function.

Optionally, the processor is configured to perform:
determining the target first device or function through a network repository function (NRF).

Optionally, the processor is configured to perform:
sending a third request to the NRF;
receiving information of the target first device or function which is sent by the NRF according to the third request;
where the third request includes information of the private network address and/or information of the public network address;
the information of the private network address includes one or more of: an IPv4 address, an IPv6 prefix and an IP domain; the information of the public network address includes one or more of the IPv4 address and the IPv6 prefix.

Optionally, the processor is configured to perform:
calling a service of the target first device or function to obtain the correspondence between the public network address and the private network address from the target first device or function.

Optionally, the processor is configured to perform:
sending a fourth request to the target first device or function, where the fourth request includes an ID and/or a type of the first network function;
receiving the correspondence between the public network address and the private network address sent by the target first device or function according to the fourth request.

Optionally, the processor is configured to perform:
calling a service of the first device or function to obtain the private network address corresponding to the public network address from the target first device or function.

Optionally, the processor is configured to perform:
sending a fifth request to the target first device or function, where the fifth request includes an ID and/or a type of the first network function and the private network address;
receiving the private network address corresponding to the public network address and sent by the target first device or function according to the fifth request.

Optionally, the processor is configured to perform:
according to a request of an AF, obtaining the private network address corresponding to the public network address;
according to a request from a second device or function, obtaining the public network address corresponding to the private network address.

In a tenth aspect, an information processing device is provided in the embodiment of the present disclosure, applied to a first device or function, including: a processor and a transceiver;
the transceiver is configured to send network address translation information to the first network function, where the network address translation information includes one or more of the following:
a correspondence between a public network address and a private network address;
a public network address;
a private network address;
a port number of a public network address;
a port number of a private network address.

Optionally, the transceiver is configured to perform:
sending a sixth request to a NRF, where the sixth request is configured to register with the NRF, where the sixth request includes: information of the private network address and/or information of the public network address;
the information of the private network address includes one or more of the following: IPv4 address segment, IPv46 prefix segment, IP domain information, and port number;
the information of the public network address includes one or more of the following: IPv4 address segment, IPv46 prefix segment, and port number.

Optionally, the transceiver is configured to perform:
sending a seventh request to the NRF, where the seventh request is configured to deregister with the NRF;
sending an eighth request to the NRF, where the eighth request is configured to perform a registration update with the NRF.

Optionally, the transceiver is configured to perform:
receiving a request from the first network function and including an ID and/or a type of a network device for the first network function;
according to the request, sending the network address translation information to the first network function.

Optionally, the request further includes one or more of: information of a candidate public network addresses and information of a candidate private network addresses.

In an eleventh aspect, an information processing device is provided in the embodiment of the present disclosure, applied to a network repository function (NRF), including: a processor and a transceiver;
the transceiver is configured to obtain a request from a first network function; according to the request, send information of a first device or function to the first network function, where the first device or function is configured to provide network address translation information or perform a network address translation according to network address translation information;
the network address translation information includes one or more of the following:
   a correspondence between a public network address and a private network address;
   a public network address;
   a private network address;
   a port number of a public network address;
   a port number of a private network address.

Optionally, the transceiver is configured to:
receive a sixth request from the first device or function;
the processor is configured to perform:
registering the first device or function according to the sixth request;
the sixth request includes: information of the private network address and/or information of the public network address;
the information of the private network address information includes one or more of the following: IPv4 address segment, IPv46 prefix segment, IP domain information, port number;
the information of the public network address includes one or more of the following: IPv4 address segment, IPv46 prefix segment, and port number.

Optionally, the processor is configured to perform one or more of the following:
receiving a seventh request from the first device or function, and deregistering the first device or function according to the seventh request;
receiving an eighth request of the first device or function, and performing a registration update of the first device or function according to the eighth request.

In a twelfth aspect, an information processing device is provided in the embodiment of the present disclosure, applied to a first network function, including: a processor and a transceiver;
the processor is configured to discover through a network repository function (NRF) a first device or function, where the first device or function is configured to provide network address translation information or to perform a network address translation according to network address translation information;
the network address translation information includes one or more of the following:
   a correspondence between a public network address and a private network address;
   a public network address;
   a private network address;
   a port number of a public network address;
   a port number of a private network address.

Optionally, the processor is configured to perform:
sending a request to the NRF;
receiving information of the first device or function sent by the NRF according to the request;
where the request includes information of the private network address and/or information of the public network address;
the information of the private network address includes one or more of: IPv4 address, IPv6 prefix, the IP domain; the information of the public network address includes one or more of IPv4 address and IPv6 prefix.

In a thirteenth aspect, a communication device is provided in the embodiment of the present disclosure, including: a memory, a processor, and a program stored in the memory and executable on the processor; where the processor is configured to read the program in the memory to perform the information processing method hereinabove.

In a thirteenth aspect, a readable storage medium is provided in the embodiment of the present disclosure, storing a program, where the program is executed by a processor to perform the information processing method hereinabove.

In the embodiment of the present disclosure, the first network function can obtain network address translation information from the first device or function, and perform a processing according to the network address translation information. According to the embodiment of the present disclosure, since the first network function can obtain the network address translation information, the first network function can implement the corresponding network address translation function, thereby enabling an end-to-end control.

### BRIEF DESCRIPTION OF THE DRAWINGS

Fig.1 is a flowchart of an information processing method provided in an embodiment of the present disclosure;
Fig.2 is a second flowchart of the information processing method provided in an embodiment of the present disclosure;
Fig.3 is a third flowchart of the information processing method provided in an embodiment of the present disclosure;
Fig.4 is a fourth flowchart of the information processing method provided in an embodiment of the present disclosure;
Fig.5 is a fifth flowchart of the information processing method provided in an embodiment of the present disclosure;
Fig.6 is a sixth flowchart of the information processing method provided in an embodiment of the present disclosure;
Fig.7 is a structural view of an information processing device provided in an embodiment of the present disclosure;
Fig.8 is a second structural view of the information processing device provided in an embodiment of the present disclosure;
Fig.9 is a third structural view of the information processing device provided in an embodiment of the present disclosure;
Fig.10 is a fourth structural view of the information processing device provided in an embodiment of the present disclosure;
Fig.11 is a fifth structural view of the information processing device provided in an embodiment of the present disclosure;
Fig. 12 is a sixth structural view of the information processing device provided in an embodiment of the present disclosure;
Fig. 13 is a seventh structural view of the information processing device provided in an embodiment of the present disclosure; and
Fig. 14 is an eighth structural view of the information processing device provided in an embodiment of the present disclosure.

### DETAILED DESCRIPTION

In the embodiments of the present disclosure, the term "and/or" describes the association relationship of the associated objects, indicating that there may be three relationships. For example, A and/or B may represent: A exists alone, A and B exist at the same time, and B exists alone. The character "/" generally indicates that the associated objects before and after are in an "or" relationship.

In the embodiments of the present disclosure, the term "plurality" refers to two or more than two, and other quantifiers are similar.

The following will be combined with the drawings in the embodiments of the present disclosure to clearly and completely describe the technical solutions in the embodiments of the present disclosure. Obviously, the described embodiments are only part of the embodiments of the present disclosure, not all of the embodiments. Based on the embodiments in the present disclosure, all other embodiments obtained by ordinary technicians in this field without creative work are within the scope of protection of this application.

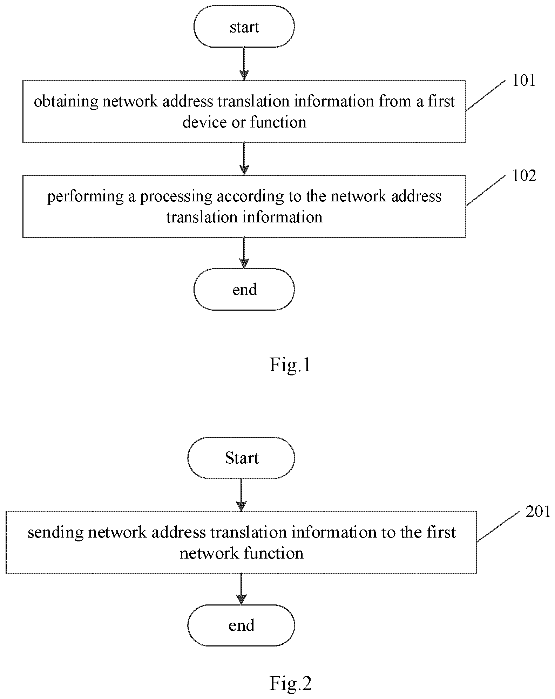

Referring to Fig. 1, Fig. 1 is a flow chart of an information processing method provided in an embodiment of the present disclosure, which is applied to a first network function. The first network function includes at least one of the following: NEF; SMF; UPF; PCF; network address translation function. The network address translation function may be a newly added network address translation function. As shown in Fig. 1, the method includes the following steps:

Step 101: obtaining network address translation information from a first device or function.

The first device or function includes one or more of the following:
Network address translation function; Network address translation device; Network address translation network element; External function; Device or function or network element having network address translation information; device or function or network element having network address translation function.

For example, in practical applications, the first device or function may be NAT, where NAT may be designed as a network function (NF), namely NATF (NAT (Network Address Translation) NF).

The network address translation information includes one or more of the following:
a correspondence between public network address and private network address; public network address; private network address; port number of public network address; port number of private network address.

In the embodiment of the present disclosure, for example, the external address of NAT (outside 5GC) is a public network address, and the private network address is used inside 5GC.

In the embodiments of the present disclosure, the network address translation information can be obtained in a variety of ways.

For example, the first network function may determine the target first device or function, and obtain the network address translation information from the target first device or function. After obtaining the network address translation information, the first network function may store it for subsequent use. At this time, the first network function may be NEF, etc.

For another example, the first network function may obtain a first request from an application function (AF), the first request including a public network address, and determine a target first device or function according to the first request. Afterwards, the first network function obtains the correspondence between the public network address and the private network address, or the private network address corresponding to the target public network address, from the target first device or function. That is, in this case, network address translation information is obtained in response to the first request of AF. In this case, when the correspondence between the public network address and the private network address is obtained from the target first device or function, the first network function may also determine the private network address corresponding to the public network address according to the public network address and the correspondence between the public network address and the private network address in subsequent steps. Among them, the first request may be, for example, a user equipment (UE) identification query request or a session binding request, etc. At this time, the first network function may be NEF, etc.

For another example, the first network function may also obtain a second request from the AF, where the second request is configured to request a mapping relationship between a public network address and a private network address. Afterwards, the first network function may determine the target first device or function based on the second request, and obtain the corresponding relationship between the public network address and the private network address from the target first device or function. That is, in this case, the network address translation information is obtained in response to the first request from the AF. At this time, the first network function may be an SMF, UPF, PCF, etc. The second request may be sent, for example, when the AF needs to request capability exposure information.

Through the above methods, network address translation information can be obtained flexibly to meet the needs of different scenarios.

In actual applications, the first device or function can be registered in NRF, and other devices or functions can find the target first device or function through NRF, and then obtain network address translation information from the target first device or function. The target first device or function refers to the first device or function that can be discovered by NRF. When obtaining network address translation information from the target first device or function, other devices or functions can obtain it by calling the service of the target first device or function.

Specifically, in the above situations, the first network function can determine the target first device or function through NRF. Specifically, the first network function can send a third request to the NRF, and receive the information of the target first device or function sent by the NRF according to the third request. The third request includes information of the private network address and/or information of the public network address; the information of the private network address includes one or more of: the IPv4 address, IPv6 prefix, and IP domain; the information of the public network address includes one or more of the IPv4 address and IPv6 prefix. The information of the target first device or function can be, for example, the name of the first network or function, instance ID, etc.

In the above cases, when it is necessary to obtain the correspondence between the public network address and the private network address from the target first device or function, the first network function may call the service of the target first device or function to obtain the correspondence between the public network address and the private network address from the target first device or function. Specifically, the first network function sends a fourth request to the target first device or function, and receives the correspondence between the public network address and the private network address sent by the target first device or function according to the fourth request, and the fourth request includes the ID and/or type of the first network function.

In the above cases, the first network function may call the service of the first device or function to obtain the private network address corresponding to the public network address from the target first device or function. Specifically, the first network function sends a fifth request to the target first device or function, and receives the private network address corresponding to the public network address sent by the target first device or function according to the fifth request, where the fifth request includes the ID and/or type of the first network function and the private network address.

Step 102: performing a processing according to the network address translation information.

In this step, the first network function mainly performs one or more of the following: mapping the public network address to the private network address according to the request of the AF; mapping the private network address to the public network address according to the request of the second device or function. The second device or function may be a device or function in the network that needs to map the private network address to the public network address.

In the embodiment of the present disclosure, the first network function can obtain network address translation information from the first device or function, and perform processing according to the network address translation information. Using the solution of the embodiment of the present disclosure, since the first network function can obtain the network address translation information, the first network function can implement the corresponding network address translation function, thereby enabling end-to-end control.

Refer to Figure 2, which is a flow chart of the information processing method provided by an embodiment of the present disclosure, which is applied to a first device or function. Wherein, the first device or function includes one or more of the following: network address translation function; network address translation device; network address translation network element; external function; device or function or network element with network address translation information; device or function or network element with network address translation function. For example, in actual application, the first device or function can be NATF. As shown in Figure 2, the method includes the following steps:

Step 201: sending network address translation information to the first network function, where the network address translation information includes one or more of the following: a correspondence between a public network address and a private network address; a public network address; a private network address; a port number of a public network address; a port number of a private network address.

In this step, the first device or function may receive a request from the first network function, including an ID and/or type of a network device of the first network function, and send the network address translation information to the first network function according to the request.

The meaning of the first network function may refer to the description of the above embodiment. The request may also include one or more of the information of the candidate public network address and the information of the candidate private network address. The information of the candidate public network address or the information of the candidate private network address may be understood as the public network address or private network address that the first network function expects to obtain.

In addition, the first function or device may also send a sixth request to the NRF, and the sixth request is configured to register with the NRF, where the sixth request includes: information of a private network address and/or information of a public network address; where the information of the private network address includes one or more of the following: an IPv4 address segment, an IPv46 prefix segment, IP domain information, and a port number; and the information of the public network address includes one or more of the following: an IPv4 address segment, an IPv46 prefix segment, and a port number.

In the embodiment of the present disclosure, taking the first function or device as NATF as an example, (one or more) NATF services may be defined. The information of the service is as follows:

### Service 1: Nnatf_event exposure service

Service name: This service can perform subscription/notification and request/response service call operations.

Service description: Allow other NFs to make service calls to NATF and obtain the mapping relationship between private network addresses and public network addresses; or, map the provided private network address /public network address to the corresponding public network address/ private network address; or, provide the port number of the public network address; or, provide the port number of the private network address, etc.

Input parameters: NF ID (NF identification) or NF type to be accessed, and optional private network address /public network address.

Output parameters: optional public network address/ private network address, mapping relationship between private network address and public network address; port number of public network address; port number of private network address.

As shown in Table 1, the network information stored by NATF is described, which may also be the information sent by NATF to NEF.

**Table 1**

| Address mapping information (Address mapping information) | Description |
|---|---|
| Direction | From N6 to 5GC; or from 5GC to N6 |
| IP address mapping | Source IPv4 address; Source port number; Destination IPv4 address; Destination port number; or |
| | Source IPv6 Prefix; Source port number; Target IPv6 Prefix; Target port number |

NATF can call NRF's service for registration. Specifically, NATF calls NRF's Nnrf_NFManagement_NFRegister service to register its own NF profile with NRF. The NF profile includes but is not limited to: NF type, NF instance ID, NF fully qualified domain name (FQDN) or IP address, NF service name, network slice information, data network domain name (DNN) information, private network address information, public network address information; the private network address information includes: IPv4 address segment, IPv6 prefix segment, IP domain information (such as IP domain list), port number; the public network address information includes IPv4 address segment, IPv6 prefix segment, and port number.

Other NFs, such as NEF, can call NRF's Nnrf_NFDiscovery_Request service to discover the target NATF. The input parameters in Nnrf_NFDiscovery_Request include but are not limited to: one or more target NF service Name(s), NF type of the target MF, NF type of the NF service consumer, network slice information, DNN information, public network address information, and private network address information. The public network address information includes: IPv4 address or IPv6 prefix, and the private network address information includes IPv4 address, IPv6 prefix, and IP domain), etc. The query result output by NRF is NATF instance ID), etc.

In addition, the first function or device may also send a seventh request to the NRF, where the seventh request is configured to deregister with the NRF; and/or send an eighth request to the NRF, where the eighth request is configured to update registration with the NRF.

For example, NATF may call NRF's Nnrf_NFManagement_NFderegister to deregister, or may call NRF's Nnrf_NFManagement_NFUpdate to update registration.

In the embodiment of the present disclosure, the first network function can obtain network address translation information from the first device or function, and perform processing according to the network address translation information. Using the solution of the embodiment of the present disclosure, since the first network function can obtain the network address translation information, the first network function can implement the corresponding network address translation function, thereby enabling end-to-end control.

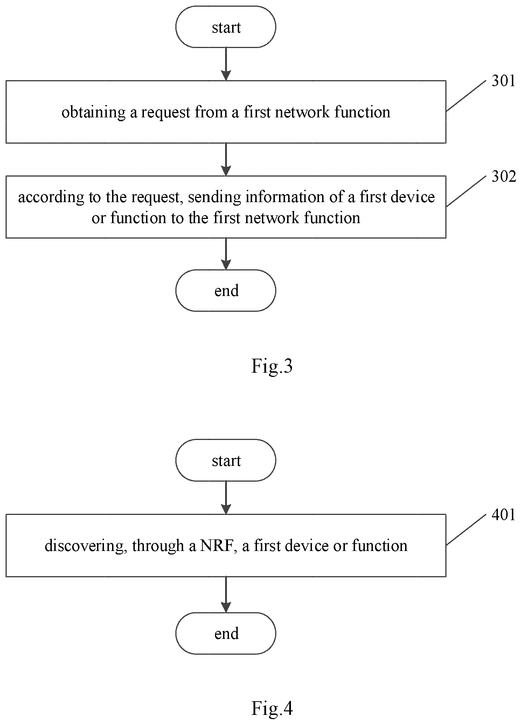

See Fig. 3, which is a flow chart of an information processing method provided in an embodiment of the present disclosure, which is applied to NRF. As shown in Figure 3, the method may include:
Step 301: obtaining a request from a first network function.
Step 302: according to the request, sending information of a first device or function to the first network function, where the first device or function is configured to provide network address translation information or perform a network address translation according to network address translation information;
the network address translation information includes one or more of the following:
a correspondence between a public network address and a private network address;
a public network address;
a private network address;
a port number of a public network address;
a port number of a private network address.

The information of the first function or device may be, for example, the name of the first function or device, an instance ID, etc.

In addition, the NRF may also receive a sixth request from the first device or function, and register the first device or function according to the sixth request; where the sixth request includes: information about a private network address and/or information about a public network address; the information about the private network address includes one or more of the following: an IPv4 address segment, an IPv46 prefix segment, IP domain information, and a port number; the information about the public network address includes one or more of the following: an IPv4 address segment, an IPv46 prefix segment, and a port number.

In addition, NRF may perform one or more of the following:
receiving a seventh request from the first device or function, and deregistering the first device or function according to the seventh request;
receiving an eighth request of the first device or function, and performing a registration update of the first device or function according to the eighth request.

In the embodiment of the present disclosure, the first network function can obtain network address translation information from the first device or function, and perform processing according to the network address translation information. Using the solution of the embodiment of the present disclosure, since the first network function can obtain the network address translation information, the first network function can implement the corresponding network address translation function, thereby enabling end-to-end control.

Fig4. is a flowchart of the information processing method provided in an embodiment of the present disclosure, which is applied to a first network function. As shown in Figure 4, the method may include:
Step 401: discovering, through a network repository function (NRF), a first device or function, where the first device or function is configured to provide network address translation information or to perform a network address translation according to network address translation information;
the network address translation information includes one or more of the following:
   a correspondence between a public network address and a private network address;
   a public network address;
   a private network address;
   a port number of a public network address;
   a port number of a private network address.

Specifically, in this step, the first network function sends a request to the NRF, and receives information about the first device or function sent by the NRF according to the request. The request includes information about a private network address and/or information about a public network address; the private network address information includes one or more of an IPv4 address, an IPv6 prefix, and an IP domain; the public network address information includes one or more of an IPv4 address and an IPv6 prefix.

In the embodiment of the present disclosure, the first network function can obtain network address translation information from the first device or function, and perform processing according to the network address translation information. Using the solution of the embodiment of the present disclosure, since the first network function can obtain the network address translation information, the first network function can implement the corresponding network address translation function, thereby enabling end-to-end control.

In the above embodiments, the specific implementation methods of various requests are not limited, as long as they can be implemented by using the communication mechanism between the communicating parties.

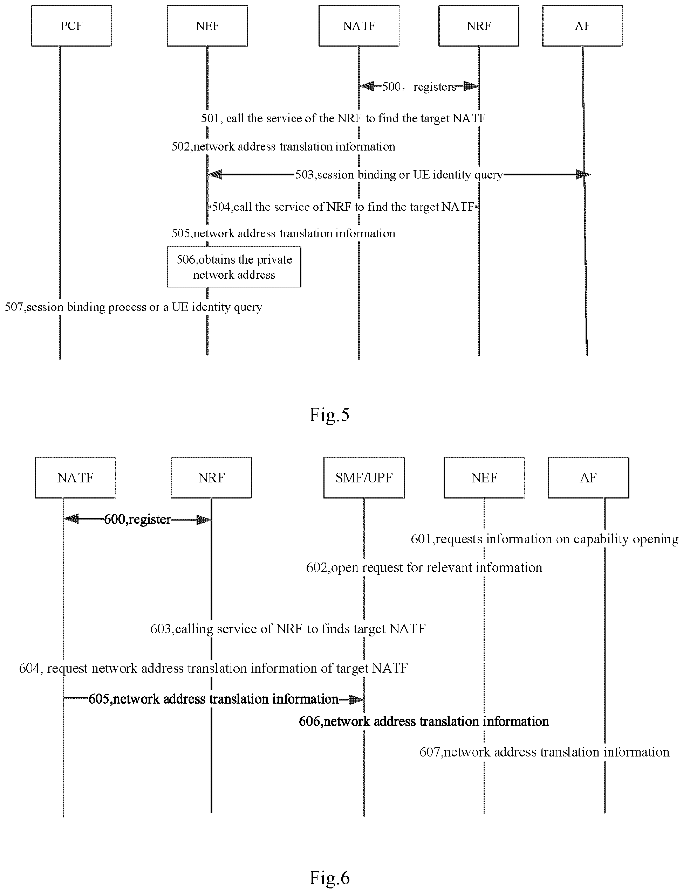

Refer to Figure 5, which is a flow chart of the information processing method of an embodiment of the present disclosure. Among them, the first network function (NEF) obtains the address mapping information of the first device or function (NATF). NEF calls the service of NATF to obtain network address translation information. NEF and NATF can interact through a service-based interface; NATF can register its own information in NRF to facilitate NEF to find the corresponding NATF through the service discovery function. The process of the embodiment of the present disclosure can be applied to the AF session binding information query process, the AF request UE identification process, etc. As shown in Fig. 5, the process may include:
Step 500: NATF registers with NRF.

The registration process may refer to the relevant contents described in the above embodiments.

Step 501: before a session is established or a specific AF is requested, the NEF calls the service of the NRF to find the target NATF. When the NEF calls the service of the NRF, the input parameters may include network slice information, DNN information, location information (UE location or NEF location), etc.

Step 502: NEF calls the service of the target NATF to obtain network address translation information, and stores it in NEF to prepare for subsequent AF requests.

Among them, step 502 and step 503 can be used as separate processes.

Step 503: The AF requests the NEF to perform session binding or UE identity query.

Step 504: NEF calls the service of NRF to find the target NATF.

Step 505: NEF calls the service of the target NATF to obtain network address translation information.

In an embodiment of the present disclosure, the network address translation information may include the correspondence between the public network address and the private network address, the public network address, the private network address, the port number of the public network address, and the port number of the private network address.

NEF provides the target NATF with the UE IP address (that is, the UE public network address corresponding to the session) and obtains the network address translation information of NATF (including the private network address of the session).

Step 506: The NEF obtains the private network address for the UE session based on the public address information provided by the AF and the network address translation information provided by the NATF.

Step 507: NEF uses the private network address to initiate a session binding process or a UE identity query process.

After step 503, if the NEF itself stores the network address translation information, the NEF can obtain the private network address of the UE for the session according to the public network address information and the network address translation information provided by the AF. Then, step 507 is executed. That is, steps 504-506 may not be executed at this time.

In the above step 505, the NEF may also directly obtain the UE private address corresponding to the session from the NATF, and in this case, step 506 may be omitted.

Through the above process, the network address translation function can be implemented in 5GC, and session binding can be realized at the same time.

See Fig. 6, which is a flow chart of the information processing method of an embodiment of the present disclosure. A schematic diagram of the process of a first network function (SMF/UPF/PCF) acquiring network address translation information of a first device or function (NATF) in an embodiment of the present disclosure. As shown in Fig. 6, the process may include:
Step 600: NATF registers with NRF.

The registration process may refer to the relevant contents described in the above embodiments.

Step 601: The AF requests the NEF for information on capability opening, including requesting network address translation information, etc. Here, the network address translation information may include, for example, a correspondence between a public network address and a private network address.

Step 602: NEF finds the corresponding SMF/UPF through PCF etc. and makes an open request for relevant information.

Step 603: SMF/UPF finds the corresponding target NATF by calling the service of NRF.

Step 604: SMF/UPF requests the network address translation information of the target NATF by calling the service of the target NATF.

Step 605: The target NATF feeds back the network address translation information to the SMF/UPF.

Step 606: SMF/UPF feeds back the network address translation information to NEF.

Step 607: NEF feeds back network address translation information to AF.

Through the above process, the network address translation function can be implemented in 5GC, and at the same time, the processing of capability exposure can be realized.

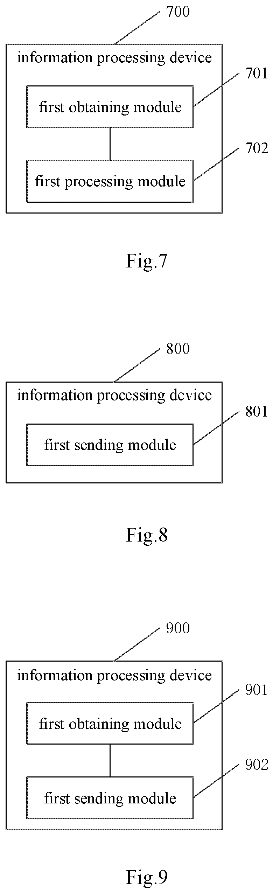

The embodiment of the present disclosure also provides an information processing device, which is applied to the first network function. As shown in Fig.7, the information processing device 700 includes:
a first obtaining module 701, configured to obtain network address translation information from a first device or function;
a first processing module 702, configured to perform a processing according to the network address translation information; where the network address translation information includes one or more of the following:
a correspondence between a public network address and a private network address; a public network address; a private network address; a port number of public network address; a port number of private network address.

Optionally, the first network function includes at least one of the following:
network exposure function (NEF); session management function (SMF); user plane function (UPF); policy control function (PCF); network address translation function.

Optionally, the first device or function includes one or more of the following:
network address translation function; network address translation device; network address translation network element; external function; device or function or network element having network address translation information; device or function or network element having network address translation function.

Optionally, the first obtaining module includes:
a first determining submodule, configured to determine a target first device or function;
a first obtaining submodule, configured to obtain the network address translation information from the target first device or function.

Optionally, the first obtaining module includes:
a first obtaining submodule, configured to obtain a first request from an application function (AF), where the first request includes the public network address;
a first determining submodule, configured to determine a target first device or function according to the first request; and
a second obtaining submodule, configured to obtain a correspondence between the public network address and the private network address, or the private network address corresponding to the target public network address, from the target first device or function.

Optionally, when the correspondence between the public network address and the private network address is obtained from the target first device or function, the first processing module is configured to:
according to the public network address and the correspondence between the public network address and the private network address, determine the private network address corresponding to the public network address.

Optionally, the second obtaining submodule is configured to:
call a service of the first device or function to obtain the private network address corresponding to the public network address from the target first device or function.

Optionally, the second obtaining submodule is configured to:
send a fifth request to the target first device or function, where the fifth request includes an ID and/or a type of the first network function and the private network address;
receive the private network address corresponding to the public network address and sent by the target first device or function according to the fifth request.

Optionally, the first obtaining module includes:
a first obtaining submodule, configured to obtain a second request from an AF, where the second request is configured to request a mapping relationship between the public network address and the private network address;
a first determining submodule, configured to determine a target first device or function according to the second request;
a second obtaining submodule, configured to obtain a correspondence between the public network address and the private network address from the target first device or function.

Optionally, the first determining submodule is configured to:
determine the target first device or function through a network repository function (NRF).

Optionally, the first determining submodule is configured to:
send a third request to the NRF;
receive information of the target first device or function which is sent by the NRF according to the third request;
where the third request includes information of the private network address and/or information of the public network address;
the information of the private network address includes one or more of: an IPv4 address, an IPv6 prefix and an IP domain; the information of the public network address includes one or more of the IPv4 address and the IPv6 prefix.

Optionally, the second obtaining submodule is configured to:
call a service of the target first device or function to obtain the correspondence between the public network address and the private network address from the target first device or function.

Optionally, the second obtaining submodule is configured to:
send a fourth request to the target first device or function, where the fourth request includes an ID and/or a type of the first network function;
receive the correspondence between the public network address and the private network address sent by the target first device or function according to the fourth request.

Optionally, the first processing submodule is configured to:
mapping the public network address to the private network address according to the request of the AF;
mapping the private network address to the public network address according to the request of the second device or function.

The device provided in the embodiment of the present disclosure can execute the above method embodiment, and its implementation principle and technical effect are similar, so this embodiment will not be repeated here.

An information processing device is provided in the embodiments of the present disclosure, applied to a first device or function. As shown in Fig.8, the information processing device 800 includes:
a first sending module 801, configured to send network address translation information to the first network function, where the network address translation information includes one or more of the following:
a correspondence between a public network address and a private network address;
a public network address;
a private network address;
a port number of a public network address;
a port number of a private network address.

Optionally, the device further includes:
a second sending module, configured to send a sixth request to a NRF, where the sixth request is configured to register with the NRF, where the sixth request includes: information of the private network address and/or information of the public network address;
the information of the private network address includes one or more of the following: IPv4 address segment, IPv46 prefix segment, IP domain information, and port number;
the information of the public network address includes one or more of the following: IPv4 address segment, IPv46 prefix segment, and port number.

Optionally, the device further includes one or more of the following:
a third sending module, configured to send a seventh request to the NRF, where the seventh request is configured to deregister with the NRF;
a fourth sending module, configured to send an eighth request to the NRF, where the eighth request is configured to perform a registration update with the NRF.

Optionally, the first sending module is configured to:
receive a request from the first network function and including an ID and/or a type of a network device for the first network function;
according to the request, send the network address translation information to the first network function.

Optionally, the request further includes one or more of: information of a candidate public network addresses and information of a candidate private network addresses.

The device provided in the embodiment of the present disclosure can execute the above method embodiment, and its implementation principle and technical effect are similar, so this embodiment will not be repeated here

The embodiment of the present disclosure also provides an information processing device, which is applied to NRF. As shown in Fig.9, the information processing device 900 includes:
a first obtaining module 901, configured to obtain a request from a first network function;
a first sending module 902, configured to, according to the request, send information of a first device or function to the first network function, where the first device or function is configured to provide network address translation information or perform a network address translation according to network address translation information;
the network address translation information includes one or more of the following:
   a correspondence between a public network address and a private network address;
   a public network address;
   a private network address;
   a port number of a public network address;
   a port number of a private network address.

Optionally, the device further includes:
a first receiving module, configured to receive a sixth request from the first device or function;
a first registering module, configured to register the first device or function according to the sixth request;
the sixth request includes: information of the private network address and/or information of the public network address;
the information of the private network address information includes one or more of the following: IPv4 address segment, IPv46 prefix segment, IP domain information, port number;
the information of the public network address includes one or more of the following: IPv4 address segment, IPv46 prefix segment, and port number.

Optionally, the device further includes one or more of the following:
a first deregistering module, configured to receive a seventh request from the first device or function, and deregister the first device or function according to the seventh request;
a first registering update module, configured to receive an eighth request of the first device or function, and perform a registration update of the first device or function according to the eighth request.

The device provided in the embodiment of the present disclosure can execute the above method embodiment, and its implementation principle and technical effect are similar, so this embodiment will not be repeated here.

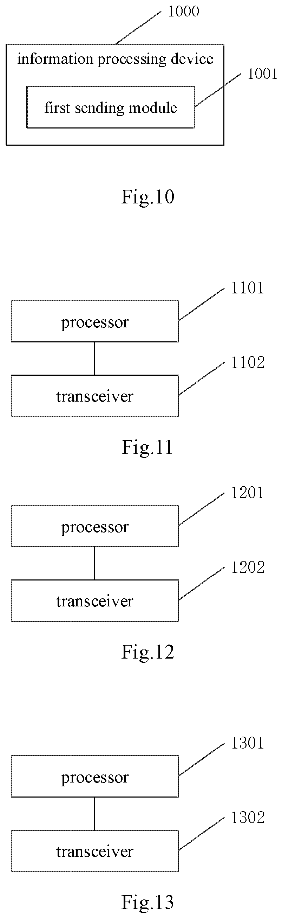

The embodiment of the present disclosure also provides an information processing device, which is applied to the first network function. As shown in Fig. 10, the information processing device 1000 includes:
a first processing module 1001, configured to discover through a network repository function (NRF) a first device or function, where the first device or function is configured to provide network address translation information or to perform a network address translation according to network address translation information;
the network address translation information includes one or more of the following:
   a correspondence between a public network address and a private network address;
   a public network address;
   a private network address;
   a port number of a public network address;
   a port number of a private network address.

Optionally, the first processing module includes:
a first sending submodule, configured to send a request to the NRF;
a first receiving submodule, configured to receive information of the first device or function sent by the NRF according to the request;
where the request includes information of the private network address and/or information of the public network address;
the information of the private network address includes one or more of: IPv4 address, IPv6 prefix, the IP domain; the information of the public network address includes one or more of IPv4 address and IPv6 prefix.

The device provided in the embodiment of the present disclosure can execute the above method embodiment, and its implementation principle and technical effect are similar, so this embodiment will not be repeated here.

It should be noted that the division of units in the embodiments of the present disclosure is schematic and is only a logical function division. There may be other division methods in actual implementation. In addition, each functional unit in each embodiment of the present disclosure may be integrated into a processing unit, or each unit may exist physically separately, or two or more units may be integrated into one unit. The above-mentioned integrated unit may be implemented in the form of hardware or in the form of software functional units.

If the integrated unit is implemented in the form of a software functional unit and sold or used as an independent product, it can be stored in a processor-readable storage medium. Based on this understanding, the technical solution of the present disclosure is essentially or the part that contributes to the prior art or all or part of the technical solution can be embodied in the form of a software product. The computer software product is stored in a storage medium, including several instructions to enable a computer device (which can be a personal computer, server, or network device, etc.) or a processor (processor) to execute all or part of the steps of the method described in each embodiment of the present disclosure. The aforementioned storage medium includes: U disk, mobile hard disk, read-only memory (ROM), random access memory (RAM), disk or optical disk and other media that can store program code.

The embodiment of the present disclosure also provides an information processing device, which is applied to the first network function. As shown in Fig. 11, the information processing device includes: a processor 1101 and a transceiver 1102;
the transceiver 1102 is configured to obtain network address translation information from a first device or function;
the processor 1101 is configured to perform a processing according to the network address translation information; where the network address translation information includes one or more of the following:
a correspondence between a public network address and a private network address; a public network address; a private network address; a port number of public network address; a port number of private network address.

Optionally, the first network function includes at least one of the following:
network exposure function (NEF); session management function (SMF); user plane function (UPF); policy control function (PCF); network address translation function.

Optionally, the first device or function includes one or more of the following:
network address translation function; network address translation device; network address translation network element; external function; device or function or network element having network address translation information; device or function or network element having network address translation function.

Optionally, the processor is configured to perform:
determining a target first device or function;
obtaining the network address translation information from the target first device or function.

Optionally, the processor is configured to perform:
obtaining a first request from an application function (AF), where the first request includes the public network address;
determining a target first device or function according to the first request; and
obtaining a correspondence between the public network address and the private network address, or the private network address corresponding to the target public network address, from the target first device or function.

Optionally, when the correspondence between the public network address and the private network address is obtained from the target first device or function, processor is configured to perform:
according to the public network address and the correspondence between the public network address and the private network address, determining the private network address corresponding to the public network address.

Optionally, the processor is configured to perform:
obtaining a second request from an AF, where the second request is configured to request a mapping relationship between the public network address and the private network address;
determining a target first device or function according to the second request;
obtaining a correspondence between the public network address and the private network address from the target first device or function.

Optionally, the processor is configured to perform:
determining the target first device or function through a network repository function (NRF).

Optionally, the processor is configured to perform:
sending a third request to the NRF;
receiving information of the target first device or function which is sent by the NRF according to the third request;
where the third request includes information of the private network address and/or information of the public network address;
the private network address includes one or more of: an IPv4 address, an IPv6 prefix and an IP domain; the information of the public network address includes one or more of the IPv4 address and the IPv6 prefix.

Optionally, the processor is configured to perform:
calling a service of the target first device or function to obtain the correspondence between the public network address and the private network address from the target first device or function.

Optionally, the processor is configured to perform:
sending a fourth request to the target first device or function, where the fourth request includes an ID and/or a type of the first network function;
receiving the correspondence between the public network address and the private network address sent by the target first device or function according to the fourth request.

Optionally, the processor is configured to perform:
calling a service of the first device or function to obtain the private network address corresponding to the public network address from the target first device or function.

Optionally, the processor is configured to perform:
sending a fifth request to the target first device or function, where the fifth request includes an ID and/or a type of the first network function and the private network address;
receiving the private network address corresponding to the public network address and sent by the target first device or function according to the fifth request.

Optionally, the processor is configured to perform:
according to a request of an AF, mapping the public network address to the private network address;
according to a request from a second device or function, mapping the private network address to the public network address.

The device provided in the embodiment of the present disclosure can execute the above method embodiment, and its implementation principle and technical effect are similar, so this embodiment will not be repeated here.

The embodiment of the present disclosure further provides an information processing device, which is applied to a first device or function. As shown in Fig. 12, the information processing device includes: a processor 1201 and a transceiver 1202;
the transceiver is configured to send network address translation information to the first network function, where the network address translation information includes one or more of the following:
a correspondence between a public network address and a private network address;
a public network address;
a private network address;
a port number of a public network address;
a port number of a private network address.

Optionally, the transceiver is configured to perform:
sending a sixth request to a NRF, where the sixth request is configured to register with the NRF, where the sixth request includes: information of the private network address and/or information of the public network address;
the information of the private network address includes one or more of the following: IPv4 address segment, IPv46 prefix segment, IP domain information, and port number;
the information of the public network address includes one or more of the following: IPv4 address segment, IPv46 prefix segment, and port number.

Optionally, the transceiver is configured to perform one of more of:
sending a seventh request to the NRF, where the seventh request is configured to deregister with the NRF;
sending an eighth request to the NRF, where the eighth request is configured to perform a registration update with the NRF.

Optionally, the transceiver is configured to perform:
receiving a request from the first network function and including an ID and/or a type of a network device for the first network function;
according to the request, sending the network address translation information to the first network function.

Optionally, the request further includes one or more of: information of a candidate public network addresses and information of a candidate private network addresses.

The device provided in the embodiment of the present disclosure can execute the above method embodiment, and its implementation principle and technical effect are similar, so this embodiment will not be repeated here.

The embodiments of the present disclosure also provides an information processing device, which is applied to NRF. As shown in Fig. 13, the information processing device includes: a processor 1301 and a transceiver 1302;
the transceiver is configured to obtain a request from a first network function; according to the request, send information of a first device or function to the first network function, where the first device or function is configured to provide network address translation information or perform a network address translation according to network address translation information;
the network address translation information includes one or more of the following:
   a correspondence between a public network address and a private network address;
   a public network address;
   a private network address;
   a port number of a public network address;
   a port number of a private network address.

Optionally, the transceiver is configured to:
receive a sixth request from the first device or function;
the processor is configured to perform:
registering the first device or function according to the sixth request;
the sixth request includes: information of the private network address and/or information of the public network address;
the information of the private network address information includes one or more of the following: IPv4 address segment, IPv46 prefix segment, IP domain information, port number;
the information of the public network address includes one or more of the following: IPv4 address segment, IPv46 prefix segment, and port number.

Optionally, the processor is configured to perform one or more of the following:
receiving a seventh request from the first device or function, and deregistering the first device or function according to the seventh request;
receiving an eighth request of the first device or function, and performing a registration update of the first device or function according to the eighth request.

The device provided in the embodiment of the present disclosure can execute the above method embodiment, and its implementation principle and technical effect are similar, so this embodiment will not be repeated here.

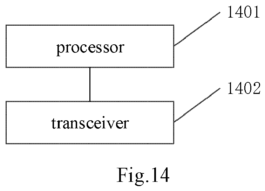

The embodiments of the present disclosure also provides an information processing device, which is applied to NRF. As shown in Fig. 14, the information processing device includes: a processor 1401 and a transceiver 1402;
the processor is configured to discover through a network repository function (NRF) a first device or function, where the first device or function is configured to provide network address translation information or to perform a network address translation according to network address translation information;
the network address translation information includes one or more of the following:
   a correspondence between a public network address and a private network address;
   a public network address;
   a private network address;
   a port number of a public network address;
   a port number of a private network address.

Optionally, the processor is configured to perform:
sending a request to the NRF;
receiving information of the first device or function sent by the NRF according to the request;
where the request includes information of the private network address and/or information of the public network address;
the information of the private network address includes one or more of: IPv4 address, IPv6 prefix, the IP domain; the information of the public network address includes one or more of IPv4 address and IPv6 prefix.

The device provided in the embodiment of the present disclosure can execute the above method embodiment, and its implementation principle and technical effect are similar, so this embodiment will not be repeated here.

An embodiment of the present disclosure provides a communication device, including: a memory, a processor, and a program stored in the memory and executable on the processor; the processor is used to read the program in the memory to perform the information processing method described above.

The embodiment of the present disclosure also provides a readable storage medium, on which a program is stored. When the program is executed by the processor, each process of the above-mentioned information processing method embodiment is implemented, and the same technical effect can be achieved. To avoid repetition, it will not be repeated here. Among them, the readable storage medium can be any available medium or data storage device that can be accessed by the processor, including but not limited to magnetic storage (such as floppy disk, hard disk, magnetic tape, magneto-optical disk (MO), etc.), optical storage (such as CD, DVD, BD, HVD, etc.), and semiconductor storage (such as ROM, EPROM, EEPROM, non-volatile memory (NAND FLASH), solid-state drive (SSD)), etc.

It should be noted that, in this article, the terms "include", "includes" or any other variations thereof are intended to cover non-exclusive inclusion, so that a process, method, article or device including a series of elements includes not only those elements, but also other elements not explicitly listed, or also includes elements inherent to such process, method, article or device. In the absence of further restrictions, an element defined by the sentence "includes a..." does not exclude the existence of other identical elements in the process, method, article or device including the element.

Through the description of the above implementation methods, those skilled in the art can clearly understand that the above-mentioned embodiment methods can be implemented by means of software plus a necessary general hardware platform, and of course can also be implemented by hardware, but in many cases the former is a better implementation method. Based on this understanding, the technical solution of the present disclosure, or the part that contributes to the prior art, can be embodied in the form of a software product, which is stored in a storage medium (such as ROM/RAM, disk, CD), and includes a number of instructions for a terminal (which can be a mobile phone, computer, server, air conditioner, or network equipment, etc.) to execute the methods described in each embodiment of the present disclosure.

It is to be understood that the embodiments described in the embodiments of the present disclosure may be implemented by hardware, software, firmware, middleware, microcode or a combination thereof. For hardware implementation, modules, units, submodules, subunits, etc. may be implemented in one or more application specific integrated circuits (ASIC), digital signal processors (DSP), digital signal processing devices (DSPD), programmable logic devices (PLD), field programmable gate arrays (FPGA), general -purpose processors, controllers, microcontrollers, microprocessors, other electronic units for performing the functions described in the present disclosure or a combination thereof.

The embodiments of the present disclosure are described above in conjunction with the accompanying drawings, but the present disclosure is not limited to the above-mentioned specific implementation methods. The above-mentioned specific implementation methods are merely illustrative and not restrictive. Under the guidance of the present disclosure, ordinary technicians in this field can also make many forms without departing from the purpose of the present disclosure and the scope of protection of the claims, all of which are within the protection of the present disclosure.

## Claims

1. An information processing method, applied to a first network function, comprising:
obtaining network address translation information from a first device or function;
performing a processing according to the network address translation information; wherein the network address translation information comprises one or more of the following:
a correspondence between a public network address and a private network address; a public network address; a private network address; a port number of public network address; a port number of private network address.

2. The method according to claim 1, wherein the first network function comprises at least one of the following:
network exposure function (NEF); session management function (SMF); user plane function (UPF); policy control function (PCF); network address translation function.

3. The method according to claim 1, wherein the first device or function comprises one or more of the following:
network address translation function; network address translation device; network address translation network element; external function; device or function or network element having network address translation information; device or function or network element having network address translation function.

4. The method according to claim 1, wherein the obtaining the network address translation information from the first device or function comprises:
determining a target first device or function;
obtaining the network address translation information from the target first device or function.

5. The method according to claim 1, wherein the obtaining the network address translation information from the first device or function comprises:
obtaining a first request from an application function (AF), wherein the first request comprises the public network address;
determining a target first device or function according to the first request; and
obtaining a correspondence between the public network address and the private network address, or the private network address corresponding to the target public network address, from the target first device or function.

6. The method according to claim 5, wherein when the correspondence between the public network address and the private network address is obtained from the target first device or function, the performing the processing according to the network address translation information comprises:
according to the public network address and the correspondence between the public network address and the private network address, determining the private network address corresponding to the public network address.

7. The method according to claim 1, wherein the obtaining the network address translation information from the first device or function comprises:
obtaining a second request from an AF, wherein the second request is configured to request a mapping relationship between the public network address and the private network address;
determining a target first device or function according to the second request;
obtaining a correspondence between the public network address and the private network address from the target first device or function.

8. The method according to claim 4, 5 or 7, wherein the determining the target first device or function comprises:
determining the target first device or function through a network repository function (NRF).

9. The method according to claim 8, wherein the determining the target first device or function through the NRF comprises:
sending a third request to the NRF;
receiving information of the target first device or function which is sent by the NRF according to the third request;
wherein the third request comprises information of the private network address and/or information of the public network address;
the information of the private network address comprises: one or more of IPv4 address, IPv6 prefix, the IP domain; one or more of IPv4 address and IPv6 prefix in the information of the public network address.

10. The method according to claim 5 or 7, wherein the obtaining the correspondence between the public network address and the private network address from the target first device or function comprises:
calling a service of the target first device or function to obtain the correspondence between the public network address and the private network address from the target first device or function.

11. The method according to claim 10, wherein the calling the service of the target first device or function to obtain the correspondence between the public network address and the private network address from the target first device or function comprises:
sending a fourth request to the target first device or function, wherein the fourth request comprises an ID and/or a type of the first network function;
receiving the correspondence between the public network address and the private network address sent by the target first device or function according to the fourth request.

12. The method according to claim 5, wherein the obtaining the private network address corresponding to the public network address from the target first device or function comprises:
calling a service of the first device or function to obtain the private network address corresponding to the public network address from the target first device or function.

13. The method according to claim 12, wherein the calling the service of the first device or function to obtain the private network address corresponding to the public network address from the target first device or function comprises:
sending a fifth request to the target first device or function, wherein the fifth request comprises an ID and/or a type of the first network function and the private network address;
receiving the private network address corresponding to the public network address and sent by the target first device or function according to the fifth request.

14. The method according to claim 1, wherein the performing the processing according to the network address translation information comprises at least one of the following:
according to a request of an AF, obtaining the private network address corresponding to the public network address;
according to a request from a second device or function, obtaining the public network address corresponding to the private network address.

15. An information processing method, applied to a first device or function, comprising:
sending network address translation information to the first network function, wherein the network address translation information comprises one or more of the following:
a correspondence between a public network address and a private network address;
a public network address;
a private network address;
a port number of a public network address;
a port number of a private network address.

16. The method according to claim 15, further comprising:
sending a sixth request to a NRF, wherein the sixth request is configured to register with the NRF, wherein the sixth request comprises: information of the private network address and/or information of the public network address;
the information of the private network address comprises one or more of the following: IPv4 address segment, IPv46 prefix segment, IP domain information, and port number;
the information of the public network address comprises one or more of the following: IPv4 address segment, IPv46 prefix segment, and port number.

17. The method according to claim 16, further comprising one or more of the following:
sending a seventh request to the NRF, wherein the seventh request is configured to deregister with the NRF;
sending an eighth request to the NRF, wherein the eighth request is configured to perform a registration update with the NRF.

18. The method according to claim 15, wherein the sending the network address translation information to the first network function comprises:
receiving a request from the first network function and comprising an ID and/or a type of a network device for the first network function;
according to the request, sending the network address translation information to the first network function.

19. The method according to claim 18, wherein the request further comprises one or more of: information of a candidate public network addresses and information of a candidate private network addresses.

20. An information processing method, applied to a network repository function (NRF), comprising:
obtaining a request from a first network function;
according to the request, sending information of a first device or function to the first network function, wherein the first device or function is configured to provide network address translation information or perform a network address translation according to network address translation information;
the network address translation information comprises one or more of the following:
a correspondence between a public network address and a private network address;
a public network address;
a private network address;
a port number of a public network address;
a port number of a private network address.

21. The method according to claim 20, further comprising:
receiving a sixth request from the first device or function;
registering the first device or function according to the sixth request;
the sixth request comprises: information of the private network address and/or information of the public network address;
the information of the private network address information comprises one or more of the following: IPv4 address segment, IPv46 prefix segment, IP domain information, port number;
the information of the public network address comprises one or more of the following: IPv4 address segment, IPv46 prefix segment, and port number.

22. The method according to claim 21, further comprising one or more of the following:
receiving a seventh request from the first device or function, and deregistering the first device or function according to the seventh request;
receiving an eighth request of the first device or function, and performing a registration update of the first device or function according to the eighth request.

23. An information processing method, applied to a first network function, comprising:
discovering, through a network repository function (NRF), a first device or function, wherein the first device or function is configured to provide network address translation information or to perform a network address translation according to network address translation information;
the network address translation information comprises one or more of the following:
a correspondence between a public network address and a private network address;
a public network address;
a private network address;
a port number of a public network address;
a port number of a private network address.

24. The method according to claim 23, wherein the discovering through the NRF the first device or function comprises:
sending a request to the NRF;
receiving information of the first device or function sent by the NRF according to the request;
wherein the request comprises information of the private network address and/or information of the public network address;
the information of the private network address comprises: one or more of IPv4 address, IPv6 prefix, the IP domain; one or more of IPv4 address and IPv6 prefix in the information of the public network address.

25. An information processing device, applied to a first network function, comprising:
a first obtaining module, configured to obtain network address translation information from a first device or function;
a first processing module, configured to perform a processing according to the network address translation information; wherein the network address translation information comprises one or more of the following:
a correspondence between a public network address and a private network address; a public network address; a private network address; a port number of public network address; a port number of private network address.

26. An information processing device, applied to a first device or function, comprising:
a first sending module, configured to send network address translation information to the first network function, wherein the network address translation information comprises one or more of the following:
a correspondence between a public network address and a private network address;
a public network address;
a private network address;
a port number of a public network address;
a port number of a private network address.

27. An information processing device, applied to a network repository function (NRF), comprising:
a first obtaining module, configured to obtain a request from a first network function;
a first sending module, configured to, according to the request, send information of a first device or function to the first network function, wherein the first device or function is configured to provide network address translation information or perform a network address translation according to network address translation information;
the network address translation information comprises one or more of the following:
a correspondence between a public network address and a private network address;
a public network address;
a private network address;
a port number of a public network address;
a port number of a private network address.

28. An information processing device, applied to a first network function, comprising:
a first processing module, configured to discover through a network repository function (NRF) a first device or function, wherein the first device or function is configured to provide network address translation information or to perform a network address translation according to network address translation information;
the network address translation information comprises one or more of the following:
a correspondence between a public network address and a private network address;
a public network address;
a private network address;
a port number of a public network address;
a port number of a private network address.

29. An information processing device, applied to a first network function, comprising: a processor and a transceiver;
the transceiver is configured to obtain network address translation information from a first device or function;
the processor is configured to perform a processing according to the network address translation information; wherein the network address translation information comprises one or more of the following:
a correspondence between a public network address and a private network address; a public network address; a private network address; a port number of public network address; a port number of private network address.

30. An information processing device, applied to a first device or function, comprising: a processor and a transceiver;
the transceiver is configured to send network address translation information to the first network function, wherein the network address translation information comprises one or more of the following:
a correspondence between a public network address and a private network address;
a public network address;
a private network address;
a port number of a public network address;
a port number of a private network address.

31. An information processing device, applied to a network repository function (NRF), comprising: a processor and a transceiver;
the transceiver is configured to obtain a request from a first network function; according to the request, send information of a first device or function to the first network function, wherein the first device or function is configured to provide network address translation information or perform a network address translation according to network address translation information;
the network address translation information comprises one or more of the following:
a correspondence between a public network address and a private network address;
a public network address;
a private network address;
a port number of a public network address;
a port number of a private network address.

32. An information processing device, applied to a first network function, comprising: a processor and a transceiver;
the processor is configured to discover through a network repository function (NRF) a first device or function, wherein the first device or function is configured to provide network address translation information or to perform a network address translation according to network address translation information;
the network address translation information comprises one or more of the following:
a correspondence between a public network address and a private network address;
a public network address;
a private network address;
a port number of a public network address;
a port number of a private network address.

33. A communication device, comprising: a memory, a processor, and a program stored in the memory and executable on the processor; wherein the processor is configured to read the program in the memory to perform the information processing method according to any one of claims 1 to 24.

34. A readable storage medium, storing a program, wherein the program is executed by a processor to perform the information processing method according to any one of claims 1 to 24.
